Europäisches Patentamt

European Patent Office

Office européen des brevets

(11) Veröffentlichungsnummer: **0 277 496 B1**

(12) **EUROPÄISCHE PATENTSCHRIFT**

(45) Veröffentlichungstag der Patentschrift: **01.04.92**

(21) Anmeldenummer: **88100343.8**

(22) Anmeldetag: **13.01.88**

(51) Int. Cl.5: **G01N 21/45**

(54) **Laserinterferometer-Refraktometer.**

(30) Priorität: **03.02.87 DE 3703086**

(43) Veröffentlichungstag der Anmeldung:
**10.08.88 Patentblatt 88/32**

(45) Bekanntmachung des Hinweises auf die
Patenterteilung:
**01.04.92 Patentblatt 92/14**

(84) Benannte Vertragsstaaten:
**AT BE CH DE ES FR GB GR IT LI LU NL SE**

(56) Entgegenhaltungen:
**DE-A- 3 401 900**
**DE-B- 1 244 424**
**DE-C- 3 527 579**
**DE-U- 8 701 592**

**FEINWERKTECHNIK & MESSTECHNIK, Band
92, Nr. 6, September 1984, Seiten 313-315,
München, DE; K. BUSCH et al.: "Ein interferometrischer Verschiebungskomparator für
grosse Längen"**

**TECHNISCHES MESSEN T.M. Band 52, No. 6,
Juni 1985, Seiten 225-232, München, DE;
H.-H.SCHUESSLER "Laserinterferometrische
Längenmesstechnik"**

(73) Patentinhaber: **Spindler & Hoyer GmbH &
Co.KG.
Königsallee 23
W-3400 Göttingen(DE)**

(72) Erfinder: **Frölich, Dieter, Dr.
Fehrenwinkel 36
W-3000 Hannover 51(DE)**

(74) Vertreter: **König, Norbert, Dipl.-Phys. Dr. et al
Patentanwälte Leine & König Burckhardtstrasse 1
W-3000 Hannover 1(DE)**

## Beschreibung

Die Erfindung betrifft ein Laserinterferometer-Refraktometer gemäß Oberbegriff des Anspruchs 1.

Bei der Anwendung von Laserinterferometern z.B. zur Längenbestimmung ist eine genaue Kenntnis des Brechungsindexes des Gases, gewöhnlich Luft, erforderlich, in dem sich der Meß-Laserstrahl ausbreitet, da die Wellenlänge, als deren Vielfaches sich die zu bestimmende Länge ergibt, in folgender Weise vom Brechungsindex n des Gases abhängt :

$$L = L'/n,$$

wobei L' die als bekannt vorausgesetzte Laser-Wellenlänge im Vakuum und L die Laser-Wellenlänge im Gas ist. Laserinterferometer werden vorzugsweise im Genauigkeitsbereich $\leq$ 1.E-6 eingesetzt. Daher ist eine entsprechend genaue Kenntnis des Brechungsindexes erforderlich. Praktisch läßt sich eine solche Genauigkeit nur interferometrisch erzielen.

Durch die DE-PS 35 27 579 ist ein Laserinterferometer-Refraktometer bekannt, das zwei parallel nebeneinander liegende Kammern aufweist, durch die die beiden Teilstrahlen einer Interferometer-Anordnung hindurchgeleitet werden. Um beim Ausgangszustand einer Brechzahlbestimmung möglichst identische Zustände in den beiden Kammern herstellen zu können, und um beim Messen selber in die Meßkammer möglichst behinderungsfrei Umgebungsluft eintreten lassen zu können, ist die allseitig offen ausgebildete Meßkammer mit einem entsprechend geformten Seitendeckel vakuumdicht verschließbar und ebenfalls evakuierbar. Durch Evakuieren beider Kammern können optisch identische Zustände in beiden erzeugt werden. Durch anschließendes Öffnen der Meßkammer kann diese frei mit der Umgebungsluft kommunizieren, so daß die in der Meßkammer anstehende Luft optisch weitgehend identisch ist mit der Luft, in der eine gleichzeitig und in der Nähe ablaufende interferentielle Längenmessung durchgeführt wird.

Die CH-PS 609 456 zeigt ein Refraktometer zur Messung des Brechungsindexes der Luft, bei dem die geometrische Länge der Meßstrecke durch einen Körper bestimmt ist, dessen Abmessungen von den den Brechungsindex beeinflussenden Parametern der Luft, wie Temperatur, Druck und Feuchtigkeit, praktisch unabhängig sein sollen. Als Körper dient eine Anordnung aus einem Rohr aus Glaskeramik und zwei an den Rohrenden vorgesehene Umlenkprismen zur mehrfachen Umlenkung des einen Teilstrahls innerhalb des Rohres. Durch die mehrfache Umlenkung sollen die Abmessungen des Refraktometers klein gehalten werden. Die Anordnung befindet sich in einer Vakuumkammer.

Bei diesen beiden bekannten Refraktometern wird eines von zwei grundsätzlich verwendeten Verfahren angewendet. Eine Meßzelle bekannter Länge wird abwechselnd evakuiert bzw. mit Gas bzw. Luft gefüllt. Dabei wird die Zahl der durch den Austausch von Vakuum mit Gas auftretenden Interferenzstreifen gezählt und ggf. noch interpoliert, um daraus den Brechungsindex des Gases zu ermitteln. Bei diesem Verfahren ist während der Messung der Einsatz einer Vakuumpumpe erforderlich, was nachteilig ist. Vakuumpumpen sind teuer, störanfällig und erfordern regelmäßige Wartung. Wenn nicht besonders gute und damit teure Vakuumpumpen verwendet werden, so hat das im Vakuum verbleibende Restgas nicht dieselbe Zusammensetzung wie das zu messende Gas, sondern besteht im wesentlichen aus Pumpenöl sowie evtl. aus leicht kondensierbaren Gasen. Daraus ergibt sich eine prinzipielle Unsicherheit für den Brechungsindex des zu messenden Gases.

Bei dem anderen verwendeten Verfahren werden zwei Meßzellen identischer Bauweise, insbesondere identischer geometrischer Länge, verwendet, die abwechselnd in das Interferometer eingebracht werden, wobei die eine Zelle mit dem zu messenden Gas gefüllt ist, während die andere evakuiert ist. Da bei diesem Verfahren eine Vakuumpumpe nur zur Herstellung des Vakuums in der einen Zelle verwendet wird, sind die beim ersten Verfahren beschriebenen Nachteile hier nicht so gravierend. Dagegen hat dieses Verfahren den Nachteil, daß nur die Interpolation zwischen den Interferenzstreifen möglich ist, da während des Zellenwechsels die Interferenz durch Strahlblockierung restlos verschwindet und daher die Bestimmung des ganzzahligen Teiles der Interferenzordnung nicht möglich ist. Der ganzzahlige Teil muß durch Messung von Temperatur und Druck des zu messenden Gases sowie evtl. seiner Zusammensetzung näherungsweise ermittelt werden. Daher sind solche Refraktometer im Prinzip nur Geräte zur Erhöhung der Genauigkeit von sogenannten kommerziell erhältlichen "Luftparameter-Kompensatoren". Ein solches Verfahren ist auf der Tagung "Laserinterferometrie in der Längenmeßtechnik" bei der PTB in Braunschweig am 12./13.3.1985, veranstaltet von der VDI/VDE Gesellschaft Meß- und Regelungstechnik, bekannt geworden.

Aus der DE-A 34 01 900 ist ein Interferometer zur Längen- oder Winkelmessung bekannt. Eine Lichtquelle erzeugt zwei Parallelstrahlbündel, die durch einen Teilerwürfel und jeweils zwei Teilstrahlen aufgespalten werden. Der eine Teilstrahl des einen Parallelstrahlbündels durchläuft nach Umlenkung eine Vakuumkammer und wird durch einen ersten Reflexionsspiegel zurückreflektiert zum Teilerwürfel, während der andere Teilstrahl zu einem zweiten Reflexionsspiegel läuft und von diesem ebenfalls zum Teilerwürfel zurückreflektiert wird, wo beide zurückreflektierten Teilstrahlen miteinander interferieren. Die Interferenzen werden meßtechnisch erfaßt und ausgewertet. Das andere Parallelstrahlbündel gehört zu einem Referenzsystem. Dieses Parallelstrahlbündel wird ebenfalls im Teilerwürfel in zwei Teilstrahlen aufgespalten. Der eine Teilstrahl läuft nach Umlenkung außerhalb der Vakuumkammer parallel zu dem die Vakuumkammer durchlaufenden Teilstrahl zum ersten Reflexionsspiegel und wird von diesem zum Teilerwürfel zurückreflektiert. Der andere Teilstrahl wird vom zweiten Reflexionsspiegel ebenfalls zum Teilerwürfel zurückreflektiert, wo zwischen beiden Teilstrahlbündeln Interferenzen auftreten, welche meßtechnisch erfaßt und ausgewertet werden. Die beiden Reflexionsspiegel sind zur Verstellung der optischen Weglänge ortsveränderlich ausgebildet, so daß mit den Teilstrahlgängen Längenmessungen durchführbar sind. Durch die Verschiebung der Spiegel ergibt sich stets eine Änderung der geometrischen Gesamtweglänge der Teilstrahlen.

Die Aufgabe der vorliegenden Erfindung besteht darin, ein Laserinterferometer-Refraktometer der eingangs genannten Art so auszubilden, daß eine höhere Meßgenauigkeit erzielbar ist und die Nachteile der bekannten Anordnungen vermieden sind.

Diese Aufgabe wird durch die Ausbildung gemäß Kennzeichen des Anspruchs 1 gelöst.

Die Erfindung schlägt also vor, den durch die Vakuumzelle gebildeten Teil der geometrischen Weglänge variabel zu gestalten bei konstanter geometrischer Gesamtweglänge. Hierdurch kann der Anteil des Laufweges im Vakuum und entsprechend im zu messenden Gas beliebig geändert werden, wodurch eine Änderung der optischen Weglänge erzielbar ist. Die infolge dieser Änderung hervorgerufene Zahl an Interferenzstreifen ist exakt meßbar. Da diese Zahl proportional zur Laufwegänderung im Vakuum bzw. im zu messenden Gas und zur Differenz zwischen Vakuum- und Gasbrechungsindex ist, ist bei Kenntnis der Laufwegänderung der Brechungsindex mit sehr hoher Genauigkeit ermittelbar. Die Vakuumzelle wird nur einmal evakuiert und bleibt ständig unter Vakuum. Hierdurch treten die eingangs erläuterten, durch die Vakuumpumpe bedingten Nachteile des einen Verfahrens nicht mehr auf. Eine Messung der den Brechungsindex beeinflussenden Parameter wie beim anderen oben erläuterten Verfahren ist auch nicht erforderlich, da beim Meßvorgang eine Strahlblockierung nicht auftritt.

Vorteilhafte und zweckmäßige Weiterbildungen der erfindungsgemäßen Aufgabenlösung sind in den Unteransprüchen gekennzeichnet.

Die Erfindung soll nachfolgend anhand der beigefügten Zeichnung näher erläutert werden.

Es zeigt

Fig. 1 schematisch eine erste Ausführungsform des erfindungsgemäßen Laserinterferometer-Refraktometers und

Fig. 2 eine zweite Ausführungsform des Refraktometers.

Das in der Zeichnung dargestellte Laserinterferometer-Refraktometer weist einen Laser 1 auf, dessen Lichtstrahl 17 auf einen Strahlteiler 12 geführt ist, der den Lichtstrahl 17 in zwei Teilstrahlen 18 und 19 aufspaltet. Der Teilstrahl 18 wird von einem Strahlumlenker 11 so umgelenkt, daß er im wesentlichen parallel zum anderen Teilstrahl 19 verläuft. Die Teilstrahlen 18 und 19 fallen dann auf einen Strahlaufspalter 10, der den Teilstrahl 18 in zwei weitere Teilstrahlen 20 und 20' und den Teilstrahl 19 in zwei weitere Teilstrahlen 21 und 21' aufspaltet. Im Laufweg des Teilstrahls 20 befindet sich eine Vakuumzelle 25.

Die Vakuumzelle 25 besteht aus einem Faltenbalg 2, der beidendig von Endplatten 4 und 5 vakuumdicht abgeschlossen ist. In den Endplatten 4 und 5 befinden sich Fenster 6 und 6', auf denen Retroreflektoren 8 und 7 angeordnet sind. Der Retroreflektor 8 ist außen auf der Endplatte 4 angeordnet und der Retroreflektor 7 auf der Innenseite des Fensters 6'. Der Retroreflektor 8 kann auch auf der Innenseite der Endplatte innerhalb der Vakuumzelle 25 angeordnet sein; in diesem Falle braucht die Endplatte kein Fenster oder keinen Durchbruch aufzuweisen. Der Retroreflektor 7 kann alternativ auf der Außenseite des Fensters 6' angeordnet sein. Seine Abmessungen sind geringer als die des Fensters 6', so daß ein ringförmiger Fensterbereich freibleibt für den Teilstrahl 20.

In der Endplatte 4 befindet sich ein verschließbarer Evakuierungsstutzen, beispielsweise in Form eines Rohransatzes. Der Evakuierungsstutzen kann aber auch an beliebig anderer geeigneter Stelle der Vakuumzelle vorgesehen werden.

Im Laufweg der Teilstrahlen 20' und 21' ist ein dritter Retroreflektor 9 vorgesehen, der diese Teilstrahlen parallel zu sich selbst reflektiert.

Die zur Interferenz gebrachten Teilstrahlen 20 und 20' bzw. 21 und 21' fallen auf Fotodioden 14, 15 bzw. 13, 16, mit denen die Interferenzstreifen gemessen werden. Die Ausgangssignale der Fotodioden werden einer nicht dargestellten Auswerteeinrichtung zugeführt, die aus den Signalen der Fotodetektoren den Brechungsindex errechnet.

Der Strahlaufspalter 10, die Endplatte 4 der Vakuumzelle 25 und der dritte Retroreflektor 9 sind ortsfest angeordnet. Die Endplatte 5 der Vakuumzelle 25 ist vermittels einer nicht dargestellten Vorrichtung in Richtung des Doppelpfeiles 26, d.h. in Richtung der Laufwege der Teilstrahlen 20 und 21 verschiebbar. Das Laserinterferometer-Refraktometer gemäß Zeichnung arbeitet wie folgt :

Der im Strahlaufspalter 10 erzeugte Teilstrahl 20 tritt durch das Fenster 6' in die Vakuumzelle 25 ein und fällt nach Durchlaufen derselben auf den Retroreflektor 8, der den Teilstrahl parallel zu sich selbst reflektiert. Der reflektierte Teilstrahl trifft nach nochmaligem Durchlaufen der Vakuumzelle und des Fensters 6' auf den Strahlaufspalter 10. Der andere Teilstrahl 20' trifft auf den dritten Retroreflektor 9, wird dort parallel zu sich selbst reflektiert und trifft bei entsprechendem Aufbau der optischen Anordnung den Strahlaufspalter 10 an derselben Stelle wie der Teilstrahl 20, an der sich die Teilstrahlen 20 und 20' vereinigen. Dort interferieren die Teilstrahlen 20 und 20' miteinander, und die entstehenden Interferenzstrahlen 22 und 22' treffen auf die Fotodetektoren 15 und 14.

Der durch den Strahlaufspalter 10 erzeugte Teilstrahl 21 wird ebenfalls durch das Fenster 6' der Vakuumzelle 25 geleitet und fällt auf den zweiten Retroreflektor 7, der den Teilstrahl 21 parallel zu sich selbst reflektiert. Der reflektierte Teilstrahl 21 trifft nach nochmaligem Durchlaufen des Fensters 6 auf den Strahlaufspalter 10. Der andere durch den Strahlaufspalter 10 erzeugte Teilstrahl 21' wird vom dritten Retroreflektor 9 parallel zu sich selbst reflektiert und trifft bei entsprechendem Aufbau der optischen Anordnung den Strahlaufspalter 10 an derselben Stelle wie der Strahl 21, an der die beiden Teilstrahlen 21 und 21' vereinigt werden. An der Stelle interferieren die beiden Teilstrahlen 21 und 21', und die entstehenden Interferenzstrahlen 23 und 23' treffen auf die Fotodetektoren 16 und 13.

Der Strahlaufspalter 10, die Endplatte 4 mit Retroreflektor 8 und der Retroreflektor 9 sind relativ zueinander ortsfest angeordnet. Hierdurch ist die geometrische Weglänge des Teilstrahls 20 vom Strahlaufspalter 10 über die Vakuumzelle und den Retroreflektor 8 zurück bis zum Strahlaufspalter 10 konstant und unabhängig von der Stellung der Endplatte 5 mit Fenster 6' und Retroreflektor 7. Die optische Weglänge des Teilstrahls 20 allerdings ist von der Lage der Endplatte 5 mit Fenster 6' und Reflektor 7 abhängig, da abhängig von der Stellung der Endplatte unterschiedliche Anteile des Laufwegs im Vakuum und entsprechend im zu messenden Gas verlaufen.

Die optische Weglänge des anderen Teilstrahls 20' dagegen ist konstant. Daher kommt es bei einer Bewegung der Endplatte 5 mit dem Fenster 6' und dem Retroreflektor 7 zu Interferenzerscheinungen in den Interferenzstrahlen 22 und 22' (Interferenzstreifen), die durch die Fotodetektoren 15 und 14 gemessen werden. Die Zahl der Interferenzstreifen ist dabei proportional zu der Lageänderung der Endplatte 5 und zur Differenz zwischen dem Vakuum- und Gasbrechungsindex.

Wie beim Teilstrahl 20 ist auch die optische Weglänge des Teilstrahls 21 von der Stellung der Endplatte 5 abhängig, jedoch nicht wegen der unterschiedlichen Brechungsindizes von Gas und Vakuum, sondern wegen der Abhängigkeit der geometrischen Weglänge von der Stellung der Endplatte 5 Wie beim Strahl 20' ist dagegen die optische Weglänge des Teilstrahls 21' konstant. Daher bildet das aus den Teilstrahlen 21 und 21' sowie den Retroreflektoren 7 und 9 und dem Strahlaufspalter 10 bestehende optische System ein Interferometer zur präzisen Messung der Verschiebung der Endplatte 5.

Die Auswertung der ermittelten Meßdaten geschieht folgendermaßen :

Wenn die Endplatte 5 um einen Weg z verschoben wird, so ist die Zahl der von den Fotodetektoren 13 und 16 erfaßten Interferenzstreifen

$$N0 = 2 \cdot z \cdot n/L',$$

während die Zahl der von den Fotodetektoren 14 und 15 erfaßten Interferenzstreifen

$$N1 = 2 \cdot z \cdot (n-1)/L'$$

ist. Durch Elimination von z erhält man daraus

$$n = N0/(N0-N1) \text{ bzw. } n-1 = N1/(N0-N1).$$

Hieraus ergibt sich, daß N0 um den Faktor $n/(n-1)$ größer ist als N1. Der Brechungsindex für Luft beträgt 1,0003. Hierfür wäre N0 also etwa um den Faktor 3000 größer als N1.

Von besonderer Bedeutung für ein entfernungsmessendes Laserinterferometer ist die Größe

$$1/n = 1-N1/N0.$$

Durch Fehlerrechnung erhält man die Unsicherheit $\delta$ von 1/n wie folgt :

$$\delta \ (1/n) = (N1/N0) \cdot (\delta N1/N1 + \delta N0/N0) = 0,0003 \cdot (\delta N1/N1 + \delta N0/N0).$$

Unter den vernünftigen Annahmen, daß N0 und N1 mit derselben relativen Genauigkeit meßbar sind ($\delta N1/N1 = \delta N0/N0$), da beide Größen durch denselben Weg z bestimmt sind, und daß N0 auf $\delta N0 = \pm 1$ bestimmbar ist, erhält man mit N1 = 1 (entsprechend $N0 \approx 3000$) $\delta \ (1/n) \approx 2.E-7$. Mit dieser Genauigkeit ließe sich also der Brechungsindex n messen, wenn bei einer Laser-Wellenlänge von ca. 600 nm (He-Ne-Laser) die bewegliche Einheit um ca. 1 mm verschoben wird. Dies setzt allerdings voraus, daß die Bedingung N1 = 1 (d.h. genau ein Interferenzstreifen ist an den Fotodetektoren 14 und 15 gemessen worden) mit einer Genauigkeit von 0,0003 festgelegt werden kann; mit anderen Worten : Es ist eine Streifen-Interpolation um den Faktor 3000 möglich. Eine solche Genauigkeit ist labormäßig sicher zu handhaben; für ein Gerät für den praktischen Einsatz ist ein vorsichtigerer Ansatz nötig. In der Praxis sollte eine Streifen-Interpolation um den Faktor 100 möglich sein (es ist keine hohe Meßgeschwindigkeit erforderlich). Will man damit $\delta$ (1/n) $\leqq$ 1.E-6 erreichen, so erhält man : N1 ≈ 4 bzw. z ≈ 4 mm.

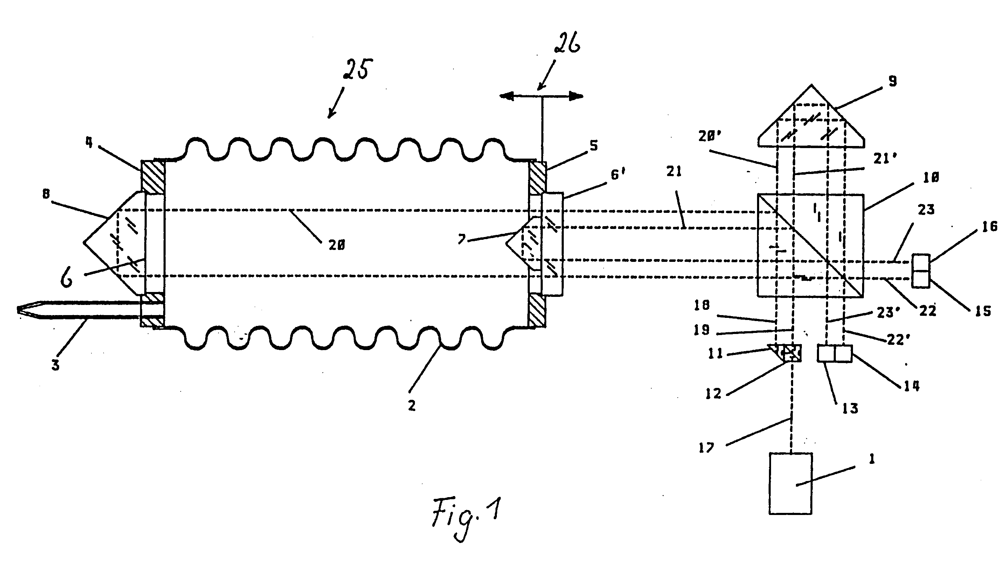

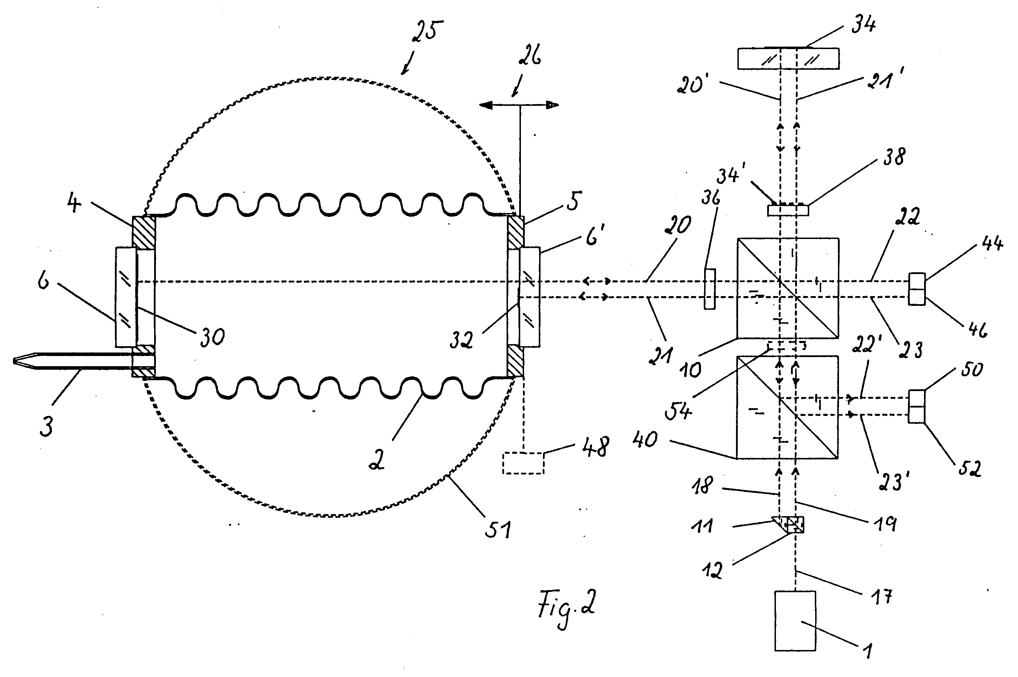

Die Fig. 2 zeigt eine andere Ausführungsform eines Laserinterferometer-Refraktometers. Der grundsätzliche Aufbau entspricht dem Aufbau des Refraktometers nach Fig. 1, so daß zur Vereinfachung Bauteile, die identisch sind mit denen des Refraktometers nach Fig. 1, die gleichen Bezugsziffern aufweisen wie in der Fig. 1. Hinsichtlich dieser Bauteile wird Bezug genommen auf die Beschreibung der Fig.1.

Die Retroreflektoren der Ausführungsform nach Fig. 1 (auch Tripelprismen genannt) sind bei der Ausführungsform nach Fig. 2 ersetzt durch Spiegel 30, 32, 34. Da die Teilstrahlen 20, 20', 21 und 21' in sich reflektiert werden, müssen zur Vermeidung von Rückkopplungen in den Laser im Weg dieser Teilstrahlen λ/4-Plättchen 36, 38 angeordnet werden, und muß der Strahlteiler 12 nach Fig. 1 als polarisierender Strahlteiler ausgeführt sein, oder es muß zwischen der Anordnung aus Strahlteiler 12 und Strahlumlenker 11 und dem Strahlaufspalter 10 ein polarisierender Strahlteiler 40 angeordnet werden, wie dies in der Fig. 2 dargestellt ist. Der Spiegel 34 kann durch eine rückseitige Verspiegelung 34' des λ/4-Plättchens 38 realisiert werden.

Die Teilstrahlen 20 und 20' bzw. 21 und 21', die miteinander interferieren sollen, werden analog wie bei der Ausführungsform nach Fig. 1 wieder im Strahlteiler 10 miteinander vereinigt. Die beiden Interferenzstrahlen 22 und 23 fallen auf zwei Fotodioden 44 und 46. Die Verwendung des zusätzlichen polarisierenden Strahlteilers 40 hat den Vorteil, daß auch noch die Interferenzteilstrahlen 22' und 23' aus dem Strahlaufspalter 10 durch Fotodioden 50, 52 erfaßt werden können. Die Ausgangssignale der Fotodioden werden wiederum einer Auswerteschaltung (nicht dargestellt) zugeführt zur Ermittlung des Brechungsindex in dem zu messenden Gas, wie dies oben schon anhand der Fig. beschrieben worden ist.

Bei den Ausführungsformen nach den Fig. 1 und 2 erfolgt die Messung der Lageänderung der Endplatte 5 durch eine interferometrische Messung. Zur Erzielung einer ausreichenden Genauigkeit kann diese Lageänderung aber auch durch Präzisionsantriebsspindeln und geeignete Wegaufnehmer 48 (s. Fig. 2) ermittelt werden. In diesem Falle können der Strahlteiler 12 und der Strahlumlenker 11 sowie die Strahlumlenker 7 bzw. 32 bei den Ausführungsformen nach den Fig. 1 und 2 entfallen. Bei der Ausführungsform nach Fig. 2 kann dann auch noch auf die Fotodioden 46 und 52 verzichtet werden. Entsprechend kann bei der Ausführungsform nach Fig. 1 auf die beiden Fotodioden 13 und 16 verzichtet werden. Schließlich ist es bei der Ausführungsform nach Fig. 1 noch möglich, überhaupt auf Paare von Fotodetektoren zur Erfassung der Interferenzen zu verzichten, so daß bei der einfachsten Ausführung mit interferometrischer Messung der Lageänderung der Endplatte 5 nur die Detektoren 15 und 16 oder 13 und 14 verwendet werden oder bei Verzicht auf die interferometrische Messung nur noch der Detektor 15 oder 14 verwendet wird.

Um eine Lageänderung der Endplatte 5 der Vakuumzelle 25 bei den Ausführungsformen nach den Fig. 1 und 2 zu erzielen, ist der Mantel der Vakuumzelle 25 als Faltenbalg 2 ausgebildet. Anstelle eines Faltenbalges kann auch ein kugelförmiger nachgiebiger Hohlkörper 51 (in Fig. 2 gestrichelt eingezeichnet), ein ellipsoidförmiger nachgiebiger Hohlkörper (nicht dargestellt) oder eine Teleskopanordnung von Rohren (nicht dargestellt) verwendet werden, die gegeneinander mit Hilfe von Gleitdichtungen vakuumdicht abgedichtet sind.

Statt des Lasers 1 und des aus dem Strahlenteiler 12 und dem Strahlumlenker 11 bestehenden optischen Systems können auch zwei Laser zur Erzeugung der beiden Strahlen 18 und 19 verwendet werden.

Die λ/4-Plättchen 36, 38 in den Laufwegen der Teilstrahlen 20, 20', 21 und 21' können durch ein λ/4-Plättchen 54 (gestrichelt in der Fig. 2 eingezeichnet) zwischen den Strahlteilern 10 und 40 ersetzt werden oder zwischen den Strahlteilern 10 und 12, falls der Strahlteiler 40 fehlt.

Das Umlenkmittel 8 kann auch außerhalb der Vakuumzelle 25 bzw. des Fensters 6 angeordnet sein, wodurch beispielsweise die Übertragung von Schwingungen aufgrund der Bewegung der Endplatte 5 vermieden wird.

## Patentansprüche

1. Laserinterferometer-Refraktometer zur Messung des Brechungsindexes eines Gases mit einem Laser (1), mit wenigstens einem Strahlteiler (12) zum Aufspalten des Laserlichtstrahles in wenigstens ein Paar von Teilstrahlen (20, 20'), mit einer evakuierbaren Zelle (25), die den Vakuumlaufweg eines aus einem Teil-Laufweg im Vakuum und einem Teil-Laufweg im zu messenden Gas gebildeten Gesamtlaufweges des einen Teilstrahles (20) des Teilstrahlpaares (20, 20') bildet, mit wenigstens zwei die Vereinigung der Teilstrahlen bewirkenden Strahlumlenkern (6, 9) zur Erzeugung von Interferenzen zwischen den Teilstrahlen und mit einer Einrichtung (5, 26) zur Verstellung der optischen Weglänge, **dadurch gekennzeichnet,** daß die optische Weglänge des einen Teilstrahles (20) bei konstanter geometrischer Gesamtweglänge jedes der beiden Teilstrahlen (20, 20') durch Verschieben einer den Vakuumraum der Zelle (25) begrenzenden Wand (5) verstellbar ist, wobei die Verstellung interferometrisch oder mit Hilfe eines Wegaufnehmers meßbar ist.

2. Refraktometer nach Anspruch 1, **dadurch gekennzeichnet,** daß die Zelle (25) ein in der Länge verstellbares Mantelteil (29 aufweist, dessen eine Stirnseite durch die verstellbare Wand (5) und dessen andere Stirnseite durch eine weitere Wand (4) vakuumdicht verschlossen ist.

3. Refraktometer nach Anspruch 2, **dadurch gekennzeichnet,** daß die Wände (5, 4) Endplatten sind, von denen wenigstens die den Gesamtlaufweg aufteilende Endplatte (5) ein Fenster (6') für den Durchtritt des Teilstrahles (20) aufweist und die andere Endplatte (4) mit einem den Teilstrahl reflektierenden Umlenkmittel (8) ausgestattet ist.

4. Refraktometer nach Anspruch 2, **dadurch gekennzeichnet,** daß das Mantelteil ein Faltenbalg (2), eine Teleskoprohranordnung, ein kugel- oder ellipsoidförmiger nachgiebiger Hohlkörper (51) ist.

5. Refraktometer nach Anspruch 3, **dadurch gekennzeichnet,** daß die verschiebbare Endplatte (5) mit einer mechanischen Antriebsvorrichtung in Wirkverbindung steht.

6. Refraktometer nach Anspruch 3, **dadurch gekennzeichnet,** daß die andere Endplatte (4) ein Fenster (6) mit einem außenseitig aufgebrachten Umlenkmittel (8) aufweist, oder daß der Endplatte (4) ein außerhalb angeordnetes Umlenkmittel nachgeschaltet ist.

7. Refraktometer nach Anspruch 3 oder 6, **dadurch gekennzeichnet,** daß das Umlenkmittel ein Retroreflektor oder ein Spiegel ist.

8. Refraktometer nach einem der vorhergehenden Ansprüche, **dadurch gekennzeichnet,** daß der andere Teilstrahl (20') durch eine weitere (dritte) Umlenkeinrichtung (9) zur Vereinigung und zum Interferieren mit dem vom ersten Umlenkmittel (8) in den Strahlaufspalter (10) reflektierten Teilstrahl (20) ebenfalls in den Strahlaufspalter (10) reflektiert

9. Refraktomter nach Anspruch 8, **dadurch gekennzeichnet,** daß die weitere Umlenkeinrichtung (9) ein Retroreflektor oder ein Spiegel ist.

10. Refraktometer nach Anspruch 8, **dadurch gekennzeichnet,** daß die Interferenzstrahlen (22, 22') auf eine lichtempfindliche Einrichtung (15, 14) gerichtet sind.

11. Refraktometer nach einem der vorhergehenden Ansprüche, **dadurch gekennzeichnet,** daß der Verstellweg der Wand (5) mit Hilfe einer Präzisionsantriebsspindel und des Wegaufnehmers (48) gemessen wird.

12. Refraktometer nach einem der vorhergehenden Ansprüche, **dadurch gekennzeichnet,** daß zur interferometrischen Messung des Verstellweges der verstellbaren Wand (5) ein zweiter Laserlichtstrahl (19) auf den Strahlaufspalter (10) gelenkt wird, der zwei Teilstrahlen (21, 21') erzeugt, von denen der eine (21) auf eine auf dem Fenster (6') der verstellbaren Wand (5) angebrachte weitere (zweite) Umlenkeinrichtung (7) und der andere (21) auf die dritte Umlenkeinrichtung (9) gelenkt ist, wobei die Umlenkeinrichtungen (7, 9) die Teilstrahlen (21, 21') zur Vereinigung und zum Interferieren in den Strahlaufspalter (10) reflektieren.

13. Refraktometer nach Anspruch 12, **dadurch gekennzeichnet,** daß die zweite Umlenkeinrichtung (7) ein Retroreflektor oder ein Spiegel ist.

14. Refraktometer nach Anspruch 12, **dadurch gekennzeichnet,** daß die Interferenzstrahlen auf eine lichtempfindliche Einrichtung (13, 16) gelenkt sind.

15. Refraktometer nach Anspruch 12, **dadurch gekennzeichnet,** daß zur Erzeugung der zwei Laserlichtstrahlen (18, 19) zwischen dem Strahlaufspalter (10) und dem Laser (1) eine optische Anordnung aus einem Strahlteiler (12) und einem Strahlumlenker (11) zur Aufspaltung des Laserlichtstrahles in zwei parallele Teilstrahlen (18, 19) angeordnet ist.

16. Refraktometer nach einem der vorhergehenden Ansprüche, **dadurch gekennzeichnet,** daß bei Verwendung von Spiegeln als Umlenkeinrichtungen (7, 8, 9) der Strahlteiler (12) ein poiarisierender Strahlteiler ist, und daß in den Laufwegen der Teilstrahlen (20, 20', 21 und 21') λ/4-Plättchen (36, 38) angeordnet sind.

17. Refraktometer nach einem der vorhergehenden Ansprüche, **dadurch gekennzeichnet,** daß bei Verwendung von Spiegeln als Umlenkeinrichtungen (7, 8, 9) zwischen dein Strahlteiler (12) und dem Strahlaufspalter (10) ein polarisierender Strahlteiler (40) angeordnet ist.

18. Refraktometer nach Anspruch 16 oder 17, **dadurch gekennzeichet,** daß die dritte Umlenkeinrichtung (9) durch eine rückseitige Verspiegelung des λ/4-Plättchens (38) im Laufweg der Teilstrahlen (20', 21') gebildet ist.

19. Refraktometer nach einem der vorhergehenden Ansprüche, **dadurch gekennzeichnet,** daß die Interferenzteilstrahlen durch Paare von Fotodetektoren (14, 15; 13, 16; 44, 50; 46, 52) als lichtempfindliche Einrichtungen erfaßt werden.

20. Refraktometer nach Anspruch 19, **dadurch gekennzeichnet,** daß die Ausgagssignale der Fotodioden einer Auswerteeinrichtung zugeführt sind, in der der Brechungsindex des zu messenden Gases aus der ermittelten Zahl der Interferenzstreifen berechnet wird, die proportional ist zum Verstellweg der verstellbaren Wand (5) und zur Differenz zwischen Vakuum- und Gas-Brechungsindex.

21. Refraktometer nach Anspruch 17, **dadurch gekennzeichnet,** daß anstelle der λ/4-Plättchen (36, 38) in den Laufwegen der Teilstrahlen (20, 20', 21 und 21') ein λ/4-Plättchen (54) zwischen den Strahlteilern (10 und 40 bzw. 10 und 12) angeordnet ist.

## Claims

1. A laser interferometer-refractometer for measuring the refractive index of a gas by a laser (1). having at least one beam-divider (12) for splitting up the beam of laser light into at least one pair of component beams (20, 20'), having an evacuable cell (25) which - in a total path of one component beam (20) of the pair of component beams (20, 20'), which is formed of one portion of the path in vacuo and one portion of the path in the gas to be measured - forms the portion of the path in vacuo, having at least two beam-deflectors (6, 9) which bring about the combination of the component beams for the generation of interferences between the component beams and having a device (5, 26) for adjusting the length of optical path, **characterized in that** at constant geometric total length of path of each of the two component beams (20, 20') the optical length of path of the one component beam (20) is adjustable by shifting one wall (5) bounding the vacuum chamber of the cell (25), the adjustment being measurable interferometrically or by means of a distance pick-up.

2. A refractometer as in Claim 1, **characterized in that** the cell (25) exhibits a jacket portion (29 adjustable for length, of which one endface is closed in a vacuumtight manner by the adjustable wall (5) and the other endface by a further wall (4).

3. A refractometer as in Claim 2, **characterized in that** the walls (5, 4) are endplates of which at least that endplate (5) which subdivides the total path exhibits a window (6') for the component beam (20) to pass through and the other endplate (4) is equipped with means (8) of deflection which reflects the component beam.

4. A refractometer as in Claim 2, **characterized in that** the jacket portion is a bellows (2), a telescopic arrangement or a flexible spherical or ellipsoidal hollow body (51).

5. A refractometer as in Claim 3, **characterized in that** the shiftable endplate (5) is operationally connected to a mechanical driving mechanism.

6. A refractometer as in Claim 3, **characterized in that** the other endplate (4) exhibits a window (6) with means (8) of deflection fitted on the outside, or that means of deviation arranged on the outside is connected after the endplate (4).

7. A refractometer as in Claim 3 or 6, **characterized in that** the means of deflection is a retroreflector or a mirror.

8. A refractometer as in one of the preceding Claims, **characterized in that** the other component beam (20') is likewise reflected into the beam-splitter (10) through a further (third) deflection device (9) for combination and for interference with the component beam (20) reflected into the beam splitter (10) by the first means (8) of deflection.

9. A refractometer as in Claim 8, **characterized in that** the further deflection device (9) is a retroreflector or a mirror.

10. A refractometer as in Claim 8, **characterized in that** the interference beams (22, 22') are directed at a light-sensitive device (15, 14).

11. A refractometer as in one of the preceding Claims, **characterized in that** the length of adjustment of the wall (5) is measured by means of a precision driving spindle and the distance pick-up (48).

12. A refractometer as in one of the preceding Claims, **characterized in that** for the interferometric measurement of the length of adjustment of the adjustable wall (5) a second beam (19) of laser light is directed onto the beam splitter (10) which generates two component beams (21, 21') of which one (21) is directed at a further (second) deflection device (7) fitted to the window (6') of the adjustable wall (5) and the other (21) is directed at the third deflection device (9) so that the deflection devices (7, 9) reflect the component beams (21, 21') into the beam-splitter (10) for combination and interference.

13. A refractometer as in Claim 12, **characterized in that** the second deflection device (7) is a retroreflector or a error.

14. A refractometer as in Claim 12, **characterized in that** the interference beams are directed at a light-sensitive device (13, 16).

15. A refractometer as in Claim 12, **characterized in that** for the generation of the two beams (18, 19) of laser light an optical arrangement of a beam-divider (12) and a beam deflector (11) is arranged between the beam splitter (10) and the laser (1) for splitting the beam of laser light into two parallel component beams (18, 19).

16. A refractometer as in one of the preceding Claims, **characterized in that** in the case of the employment of mirrors as deflation devices (7, 8, 9) the beam-divider (12) is a polarizing beam-divider, and that λ/4-plates (36, 38) are arranged in the paths of the component beams (20, 20', 21 and 21').

17. A refractometer as in one of the preceding Claims, **characterized in that** in the case of the employment of mirrors as deflation devices (7, 8, 9) a polarizing beam-divider (40) is arranged between the beam-divider (12) and the beam-splitter (10).

18. A refractometer as in Claim 16 or 17, **characterized in that** the third deflection device (9) is formed by a mirror-coating on the back of the λ/4-plates (38) in the path of the component beams (20', 21').

19. A refractometer as in one of the preceding Claims, **characterized in that** the interference component beams are detected by fairs of photodetectors (14, 15: 13, 16; 44, 50; 46, 52) as light-sensitive devices.

20. A refractometer as in Claim 19, **characterized in that** the output signals from the photodiodes are fed to an evaluator device in which the refractive index of the gas to be measured is calculated from the number of interference fringes detected, which is proportional to the length of adjustment of the adjustable wall (5) and to the difference between the refractive indices of vacuum and gas.

21. A refractometer as in Claim 17, **characterized in that** instead of the λ/4-plates (36, 38) in the paths of the component beams (20, 20', 21 and 21') one λ/4-plate (54) is arranged between the beam-dividers (10 and 40 or respectively 10 and 12).

**Revendications**

1. Interféromètre-réfractomètre à laser pour mesurer l'indice de réfraction d un gaz avec un laser (1), avec au moins une lame séparatrice (12) pour le dédoublement du rayon lumineux du laser en au moins une paire de rayons partiels (20, 20'), avec une cellule (25) pouvant être mise sous vide qui forme le parcours dans le vide, à partir d'un parcours global constitué d'un parcours partiel dans le vide et d'un parcours partiel dans le gaz à mesurer, de l'un des rayons partiels (20) de la paire de rayons partiels (20, 20'), avec au moins deux déviateurs de rayons (6, 9) assurant la réunion des rayons partiels pour produire des interférences entre les rayons partiels, et avec un dispositif (5, 26) pour ajuster le trajet optique, caractérisé en ce que le trajet optique de l'un des rayons partiels (20), pour des trajets optiques globaux constants de chacun des deux rayons partiels (20, 20'), peut être ajusté par translation d'une paroi (5) délimitant l'espace de vide de la cellule (25), l'ajustement pouvant être mesuré par voie interférométrique ou à l'aide d'un capteur de parcours.

2. Réfractomètre selon la revendication 1, caractérisé en ce que la cellule (25) présente une portion de chemise (29) ajustable en longueur dont une face frontale est fermée par la paroi (5) ajustable et dont l'autre face frontale est fermée de manière étanche au vide par une autre paroi (4).

3. Réfractomètre selon la revendication 2, caractérisé en ce que les parois (5, 4) sont des plaques d'extrémité dont au moins la plaque d'extrémité (5) répartissant le parcours global présente une fenêtre (6') pour le passage du rayon partiel (20) et l'autre plaque d'extrémité (4) est équipée d'un moyen déviateur (8) réfléchissant le rayon partiel.

4. Réfractomètre selon la revendication 2, caractérisé en ce que la portion de chemise est un soufflet (2), un ensemble à tubes télescopiques, un corps creux (51) flexible sphérique ou ellipsoïdal.

5. Réfractomètre selon la revendication 3, caractérisé en ce que la plaque d'extrémité (5) coulissante est en liaison active avec un dispositif d'entraînement mécanique.

6. Réfractomètre selon la revendication 3, caractérisé en ce que l'autre plaque d'extrémité (4) présente une fenêtre (6) avec un moyen déviateur (8) disposé du côté extérieur, ou bien qu'un moyen déviateur disposé à l'extérieur est intercalé après la plaque d'extrémité (4).

7. Réfractomètre selon la revendication 3 ou 6, caractérisé en ce que le moyen déviateur est un rétroréflecteur ou un miroir.

8. Réfractomètre selon l'une des revendications précédentes, caractérisé en ce que l'autre rayon partiel (20') est également réfléchi dans le dédoubleur de rayon (10) par un autre (troisième) dispositif déviateur (9) pour la réunion et pour l'interférence avec le rayon partiel (20) provenant du premier moyen déviateur (8) et réfléchi dans le dédoubleur de rayon (10).

9. Réfractomètre selon la revendication 8, caractérisé en ce que l'autre dispositif déviateur (9) est un rétroréflecteur ou un miroir.

10. Réfractomètre selon la revendication 8, caractérisé en ce que les rayons d'interférence (22, 22') sont dirigés sur un dispositif photosensible (15, 14).

11. Réfractomètre selon l'une des revendications précédentes, caractérisé en ce que le parcours d'ajustement de la paroi (5) est mesurée à l'aide d'une broche de commande de précision et du capteur de parcours (48).

12. Réfractomètre selon l'une des revendications précédentes, caractérisé en ce que, pour la mesure par voie interférométrique du parcours d'ajustement de la paroi ajustable (5), un second rayon lumineux du laser (19) est guidé sur le dédoubleur de rayon (10) qui forme deux rayons partiels (21, 21') dont l'un (21) est dirigé sur un autre (deuxième) dispositif déviateur (7) disposé sur la fenêtre (6') de la paroi ajustable (5) et l'autre (21') sur le troisième dispositif déviateur (9), les dispositifs déviateurs (7, 9) réfléchissant les rayons partiels (21, 21') dans le dédoubleur de rayon (10) pour la réunion et pour l'interférence.

13. Réfractomètre selon la revendication 12, caractérisé en ce que le deuxième dispositif déviateur (7) est un rétroréflecteur ou un miroir.

14. Réfractomètre selon la revendication 12, caractérisé en ce que les rayons d'interférence sont guidés sur un dispositif photosensible (13, 16).

15. Réfractomètre selon la revendication 12, caractérisé en ce que, pour former les deux rayons lumineux de laser (18, 19), un ensemble optique constitué d'une lame séparatrice (12) et d'un déviateur de rayon (11) est disposé entre le dédoubleur de rayon (10) et le laser (1) pour dédoubler le rayon lumineux du laser en deux rayons partiels (18, 19) parallèles.

16. Réfractomètre selon l'une des revendications précédentes, caractérisé en ce que, dans le cas de l'utilisation de miroirs comme dispositifs déviateurs (7, 8, 9), la lame séparatrice (12) est une lame séparatrice polarisante, et que des plaquettes à λ/4 (36, 38) sont disposées dans les parcours des rayons partiels (20, 20', 21 et 21').

17. Réfractomètre selon l'une des revendications précédentes, caractérisé en ce que, dans le cas de l'utilisation de miroirs comme dispositifs déviateurs (7, 8, 9), une lame séparatrice polarisante (40) est disposée entre la lame séparatrice (12) et le dédoubleur de rayon (10).

18. Réfractomètre selon la revendication 16 ou 17, caractérisé en ce que le troisième dispositif déviateur (9) est formé par un dépôt réfléchissant de face arrière de la plaquette à λ/4 (38) dans le parcours des rayons partiels (20', 21').

19. Réfractomètre selon l'une des revendications précédentes,
caractérisé en ce que les rayons partiels d'interférence sont interceptés par des paires de photodétecteurs (14, 15; 13, 16; 44, 50; 46, 52) en tant que dispositifs photosensibles.

20. Réfractomètre selon la revendication 19, caractérisé en ce que les signaux de sortie des photodiodes sont amenés à un dispositif d'analyse dans lequel l'indice de réfraction du gaz à mesurer est calculé à partir du nombre détecté de franges d'interférence, qui est proportionnel au parcours d'ajustement de la paroi ajustable (5) et à la différence entre les indices de réfraction dans le vide et dans le gaz.

21. Réfractomètre selon la revendication 20, caractérisé en ce qu'une plaquette à $\lambda/4$ (54) est disposée entre les dédoubleurs de rayon (10 et 40 respectivement 10 et 12) à la place des plaquettes à $\lambda/4$ (36, 38) dans les parcours des rayons partiels (20, 20', 21 et 21').

Fig. 1

Fig.2

EP 0 277 496 B1